# EUROPEAN PATENT APPLICATION

(11) **EP 1 908 378 A1**
(43) Date of publication of application: **09.04.2008**
(21) Application number: 07018187.0
(22) Date of filing: 17.09.2007
(51) Int. Cl.: A47J 31/057

(54) **Coffee maker and valve arrangements therefor**

(30) Priority: 21.09.2006 GB 0618528
(71) Applicant: Kenwood Limited, Havant, Hampshire PO9 2NH (GB)
(72) Inventor: Eden, Roland, Hampshire PO9 2NH (GB)
(74) Representative: Marsh, Robin Geoffrey

(57) **Abstract**

A coffee maker (10) comprises a water tank (20) a heater device (40), a brewing station (50) and a jug or carafe (60) positioned to receive coffee brewed at the station (50). The water tank (20) and the brewing station (50) are interconnected by a water pipe (70), part of which is heated by the heater device (40). The tank (20) is fitted with a flow control valve (30) containing a piston (32) arranged to respond to the head of water in the tank (20) and to heater-induced suction in the pipe (70) by moving within a housing (31) to block or to allow the passage of water from the tank (20) into the pipe (70), thereby to control the flow of water from the tank (20) through the heater (40) to the brewing station (50) so as to ensure that, however much water the tank (20) contains, the heater (40) is able to transfer sufficient heat to water delivered to the brewing station (50) by way of the pipe (70) to provide brewed coffee at a palatable temperature.

## Description

This invention relates to coffee makers and it relates more particularly to valve arrangements for controlling a flow of water from a supply tank through a heater to a coffee-brewing station of a coffee maker.

Difficulties are experienced with some such coffee makers in that, particularly when the water tank is full and there is a substantial head of standing water, the water tends to flow into and through the heater too rapidly to be sufficiently heated.

It is an object of the invention to address this difficulty and accordingly there is provided, in or for a coffee maker having a water tank, a heater and a brewing station, a valve arrangement including a flow control valve located in the flow path for water from the tank to the heater; the flow control valve comprising piston means movable between a first position in which said flow path is open, and a second position in which said flow path is closed, and resilient means urging the piston means toward said first position; the arrangement being such that the piston means responds to a head of water corresponding to a substantially full tank and to heater-induced suction to move, against the resilient urge, into said second position, thereby to temporarily close the flow path and thus restrict the flow of water from the tank when the tank is substantially full, but to move back to said first position when the heater-induced suction is relieved, thereby to re-open the flow path; the movements of the piston means thereby regulating the flow of water through the heater, to ensure that water reaching said brewing station is adequately heated irrespective of the amount of water in the tank. The invention also encompasses a coffee maker incorporating such a valve arrangement.

Preferably, the piston means cycles repeatedly between said first and second positions whilst the tank remains substantially full during the early stages of a brewing operation, and a further preferred arrangement is such that, as the tank empties and the head of water therein reduces, the piston means dwells for longer periods, and eventually remains consistently, in said first position, thereby accommodating a reduced water flow associated with the reduced amount of water in the tank.

In a preferred embodiment of the invention, the valve arrangement includes a flow control valve mounted in a well at the base of the water tank.

Another preferred embodiment of the invention further comprises a check valve configured to block a flow of water into the heater as the water is heated, thereby interrupting the heater-induced suction and allowing said resilient urge to return the piston means to the first position to re-open the flow path; and it is further preferred that the check valve is configured to re-open once the heated water has been delivered to the brewing station, thus re-establishing heater-induced suction.

In order that the invention may be clearly understood and readily carried into effect, one embodiment thereof will now be described, by way of example only, with reference to the accompanying drawings, of which:
Figure 1 shows, in schematic side elevation and part cross-sectional view, a coffee maker containing a valve arrangement in accordance with one example of the invention; and
Figure 2 shows, on an enlarged scale and in cross-sectional side view, the valve arrangement of Figure 1.

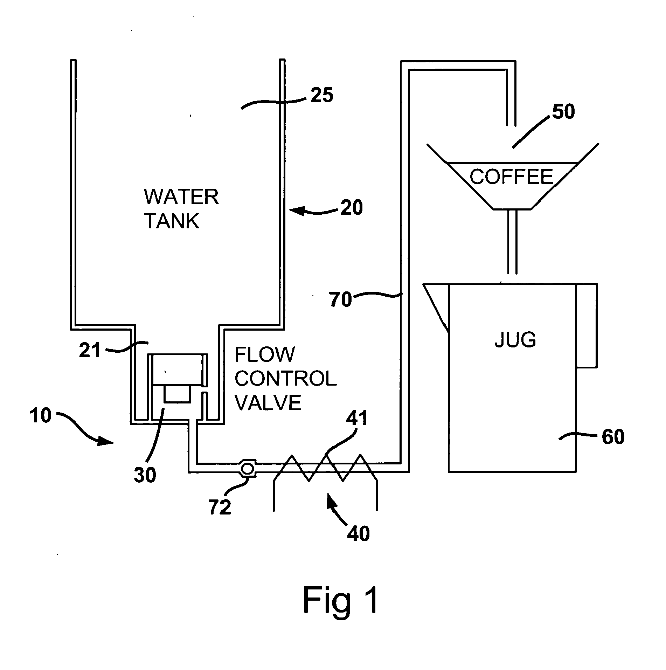

Referring now to the drawings, Figure 1 shows, schematically, a coffee maker 10 comprising a water tank 20 fitted with a flow control valve 30, a heater device 40, a brewing station 50 and a jug or carafe 60 positioned to receive coffee brewed at the station 50. The water tank 20 and the brewing station 50 are interconnected, in known manner, by a water pipe 70, part of which is heated by the heater device 40. The pipe 70 incorporates a check-valve 72, which performs a significant function in relation to the operation of this embodiment of the invention, as will be described later.

Coffee makers are well known products, and those skilled in the art will be aware that the various components described thus far may take many different forms and be provided in many different configurations. For example, it is well known that the heater device 40 may comprise an electrically-driven element 41 of any convenient form, though conveniently it comprises a spirally wound heating element closely coupled to the pipe 70 to promote excellent thermal contact between the heater device 40 and the pipe 70. It is also known that the heater device 70 may heat a pedestal (not shown) upon which the jug or carafe 60 can sit beneath the brewing station 50, in order to keep the brewed coffee warm. Moreover, the brewing station may or may not incorporate an arrangement for changing the strength (or aroma) of the brew. It is also known to provide a valve arrangement at the outlet of the brewing station 50 configured to permit brewed coffee to flow out of the station 50 only when the jug or carafe 60 is properly positioned to receive it.

It will be appreciated that such features, and others like them, are usable if desired in coffee makers according to the invention, but that neither their inclusion, nor their particular form if included, has any special bearing upon the subject invention or its operation.

This invention is concerned with controlling the flow of water from the tank 20 through the heater 40 to the brewing station 50 in such a way as to ensure that, however much water the tank 20 contains, the heater 40 is able to heat it sufficiently prior to its delivery to the brewing station 50.

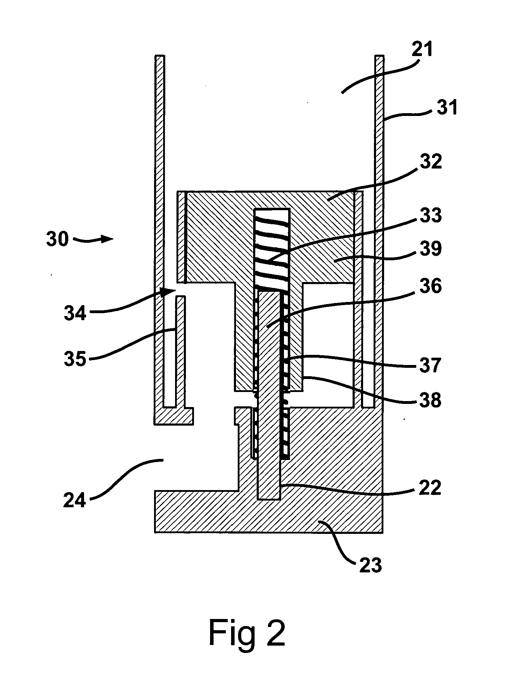

In the embodiment of the invention now to be described, and as shown in more detail in Figure 2, the flow control valve 30 is mounted in a well 21 at the base of the water tank 20, and comprises a housing 31 and a piston 32 having a head 39 and a shaft 38. The piston 32 is resiliently urged upwards by a spring 33 and which, depending upon its vertical position, can block or uncover an aperture 34 in an internal wall 35 of the housing 31. The spring 33 is supported on, centred and located by a pin 36 which extends into a bore 37 formed centrally through the shaft 38 and extending up into the head 39 of the piston 32, and which is set in a bore 22 formed in the base 23 of the well 21 of the tank 20.

It is well known that, when the heater device 40 is actuated, the heating action creates suction in the pipe 70, tending to draw water from the outlet 24 of the water tank 20; this action being assisted by the weight of the head of water for the time being held in the tank 20. When the tank is full, the combined effects of the suction and the head of water can cause water to be forced past the heater device 40 at such a rapid rate that the water is unable to draw sufficient heat from the device 40 and thus arrives at the brewing station 50 at a temperature which is too low for the taste of some users.

This embodiment of the invention addresses that problem since, in operation, pressure from the head of water in the tank 20, combined with suction from the heater 40, causes the piston 32 to move downwards, against the force exerted by the spring 33, thus closing the aperture 34 and temporarily preventing further flow of water out of the outlet 24, since the closure of aperture 34 means that there is no communication between the interior 25 of the water tank 20 and the outlet 24. As the water in the pipe 70 is heated, the check valve 72 shuts off, thus removing the suction from the base of the tank 20 and allowing the piston 32 to rise under the influence of spring 33 to uncover the aperture 34, thereby re-establishing communication between the interior 25 of the tank 20 and the tank's outlet 24.

Once the heated water has been delivered to the brewing station 50, the check valve 72 re-opens, permitting the suction again to combine with the weight of the head of water to overcome the force exerted by spring 33 and moving the piston 32 downwards again to shut off the aperture 34.

These cycles of operation repeat during at least the early stages of the brewing operation, and the oscillations executed by the piston 32 thus regulate the flow of water to and through the heater 40, to ensure that it is adequately heated. As the tank 20 empties, the head of water (and thus its weight) reduces and the piston tends to remain longer, and eventually remains consistently, at its uppermost position, thus allowing unrestricted flow from the tank outlet for the reduced forces of water flow associated with the reduced amount of water in the tank.

Although the invention has been described herein with reference to a specific embodiment, various modifications will be evident to those skilled in the art, and the scope of protection provided hereby is not intended to be limited to the aforesaid specific embodiment.

## Claims

1. In or for a coffee maker (10) having a water tank (20), a heater (40) and a brewing station (50), a valve arrangement **characterised by** a flow control valve (30) located in the flow path for water from the tank (20) to the heater (40); the flow control valve (30) comprising piston means (32) movable between a first position in which said flow path is open, and a second position in which said flow path is closed, and resilient means (33) urging the piston means (32) toward said first position; the arrangement being such that the piston means (32) responds to a head of water corresponding to a substantially full tank and to heater-induced suction to move, against the resilient urge, into said second position, thereby to temporarily close the flow path and thus restrict the flow of water from the tank (20) when the tank is substantially full, but to move back to said first position when the heater-induced suction is relieved, thereby to re-open the flow path; the movements of the piston means (32) thereby regulating the flow of water through the heater (40), to ensure that water reaching said brewing station (50) is adequately heated irrespective of the amount of water in the tank (20).

2. A valve arrangement according to claim 1, wherein said piston means (32) cycles repeatedly between said first and second positions whilst the tank (20) remains substantially full during the early stages of a brewing operation.

3. A valve arrangement according to claim 2, wherein, as the tank (20) empties and the head of water therein reduces, the piston means (32) dwells for longer periods, and eventually remains consistently, in said first position, thereby accommodating a reduced water flow associated with the reduced amount of water in the tank (20).

4. A valve arrangement according to any preceding claim, wherein said flow control valve (30) is mounted in a well (21) at the base of the water tank (20).

5. A valve arrangement according to any preceding claim, further comprising a check valve (72) configured to block a flow of water into the heater (40) as the water is heated, thereby interrupting the heater-induced suction and allowing said resilient urge to return the piston means (32) to the first position to re-open the flow path.

6. A valve arrangement according to claim 5, wherein the check valve (72) is configured to re-open once the heated water has been delivered to the brewing station (50), thus re-establishing heater-induced suction.

7. A coffee maker (10) incorporating a valve arrangement (30) according to any preceding claim.
